# EUROPEAN PATENT APPLICATION

(11) **EP 4 848 576 A1**
(43) Date of publication of application: **02.12.2026**
(21) Application number: 25178862.6
(22) Date of filing: 26.05.2025
(51) Int. Cl.: H02P 25/16, H02J 3/18, H02P 1/46

(54) **METHOD FOR STARTING A SYNCHRONOUS CONDENSER**

(71) Applicant: ABB SCHWEIZ AG, 5400 Baden (CH)
(72) Inventor: GROP, Henrik, 722 16 Västerås (SE); HARNEFORS, Lennart, 725 91 Västerås (SE); PAYERL, Christian, 732 96 Arboga (SE); ARNSTEN, Erik, 723 53 Västerås (SE)
(74) Representative: Kransell & Wennborg KB

(57) **Abstract**

A method is disclosed for starting a synchronous condenser (100) configured to be connected to an AC power grid (1). The method comprises:
- operating an AC exciter (110) of the synchronous condenser in a first operating mode, in which the AC exciter functions as a motor, to accelerate a main rotor (122) of the synchronous condenser to a first speed, the first speed being above a synchronous speed of the synchronous condenser;
- transferring the AC exciter into a second operating mode, in which the AC exciter supplies field current to the main rotor;
- in the second operating mode, allowing the main rotor to decelerate from the first speed to the synchronous speed.

## Description

### TECHNICAL FIELD

The technology disclosed herein relates generally to synchronous condensers used in AC power grids, and in particular to a method of starting such a synchronous condenser. It further relates to an electronic control unit for starting of a synchronous condenser, and to a synchronous condenser.

### BACKGROUND

Synchronous condensers are typically used in AC (alternating current) power grids to provide voltage regulation and stability by generating and absorbing reactive power. Among other benefits, the synchronous condensers provide system inertia, frequency stabilization, short-term overload capability, and short-circuit strength to the power grid. They are particularly useful in distributed power grids comprising intermittent power sources and/or power sources without rotating masses, such as solar power generators and similar.

In conventional installations, a synchronous condenser is typically started using a separate starting motor, such as an induction motor or pony motor. This auxiliary equipment accelerates the condenser's rotor to synchronous speed with the help of a variable speed drive before excitation is applied and tuned so that the voltage magnitude and phase angle match that of the power grid. A brushless DC (direct current) exciter is often used for the excitation. Once synchronization conditions are reached, the condenser is electrically connected to the power grid and the starting motor is de-energized and sometimes mechanically decoupled from the condenser.

While effective, the use of a separate starting motor is associated with several drawbacks. For example, it adds a significant length to the condenser in an axial direction thereof, since the starting motor is arranged to accelerate a rotor of the synchronous condenser via a shaft and a coupling mechanism. The starting motor and the coupling also require regular service and represent potential points of failure that may cause malfunction and downtime of the installation.

### SUMMARY

A primary objective of embodiments herein is to provide in at least some aspects improved methods and means for starting a synchronous condenser. A specific objective is to provide means and methods for starting a synchronous condenser that do not rely on the use of a dedicated starting motor, such as a pony motor. In particular, it is an object to provide such means and methods which are cost-efficient and robust and which contribute to reduced service needs and a reduced installation length of the synchronous condenser installation.

According to a first aspect, at least the primary objective is accomplished by a method according to claim 1. The method of starting a synchronous condenser, configured to be connected to an AC power grid, comprises:
- operating an AC exciter of the synchronous condenser in a first operating mode, in which the AC exciter functions as a motor, to accelerate a main rotor of the synchronous condenser to a first speed, the first speed being above a synchronous speed of the synchronous condenser;
- transferring the AC exciter into a second operating mode, in which the AC exciter supplies field current to the main rotor; and
- in the second operating mode, allowing the main rotor to decelerate from the first speed to the synchronous speed.

The method enables self-starting of the synchronous condenser using its own AC exciter, without the need for an external starting motor, such as a pony motor. By eliminating the need for a separate starting motor, a more compact synchronous condenser installation can be provided. In particular, it is possible to significantly reduce a total length of the installation in an axial direction of the condenser. Omitting the starting motor also reduces the total number of components in the installation, thereby lowering maintenance requirements and minimizing the risk of malfunction. A more robust and cost-efficient installation with reduced service needs may thereby be achieved.

By accelerating the main rotor to a speed above the synchronous speed and allowing it to decelerate to the synchronous speed, a smooth synchronization to the AC power grid, with limited transient currents and torque build-ups, may be achieved. The synchronous speed is the speed at which the synchronous condenser is synchronized with the AC power grid. It is defined as the speed at which a rotating magnetic field of a main stator of the synchronous condenser revolves. The synchronous speed is the constant angular velocity at which the main rotor must rotate to remain magnetically locked with the rotating magnetic field produced by main stator windings electrically connected to the AC power grid. This speed is determined by the frequency of the AC power grid to which the synchronous condenser is connected and the number of poles in the main stator winding.

Optionally, in the first operating mode, the method comprises controlling a variable speed drive to supply AC power to a stator winding of the AC exciter. By using a variable speed drive to control the AC power to the stator winding, precise control over acceleration and rotational speed of the AC exciter, functioning as a motor, is enabled.

Optionally, the method further comprises connecting the synchronous condenser to the power grid once a connection condition is fulfilled. By delaying the connection until a defined condition is met, the method ensures synchronization with the power grid, which may enhance system stability and reduce transients.

Optionally, the connection condition is considered fulfilled when a voltage magnitude, a frequency and a phase angle of the synchronous condenser is within a tolerance range defined relative to the AC power grid. By verifying electrical parameters against defined tolerances, the method facilitates safe and reliable grid connection, potentially reducing the risk of disturbances.

Optionally, the operating of the AC exciter in the first operating mode comprises short-circuiting an exciter rotor of the AC exciter to enable the AC exciter to function as an induction motor. By enabling the exciter to act as an induction motor, a compact and cost-effective start-up mechanism is achieved, eliminating the need for an additional starting motor.

Optionally, the short-circuiting of the exciter rotor comprises firing of a first set of thyristors configured to conduct current in a first direction to short-circuit the exciter rotor, and firing of a second set of thyristors configured to conduct current in a second direction, opposite to the first direction, to maintain the short-circuit during alternating current operation. By using thyristors to control the short-circuiting, the method allows for fast and reliable switching, which may improve control over the induction motor function during start-up. To fire a thyristor, a current pulse is applied to a gate terminal of the thyristor, triggering the thyristor into a conducting state.

Optionally, the transferring of the AC exciter into the second operating mode comprises opening the short-circuit of the exciter rotor to enable the AC exciter to supply the field current to the main rotor. By opening the short-circuit, the excitation system transitions to its normal function, enabling proper field current supply for synchronous operation.

Optionally, the first speed is no more than 110% of the synchronous speed, preferably no more than 105% of the synchronous speed. By limiting the first speed, to which the AC exciter accelerates the main rotor while operating as a motor, mechanical stress and power losses are reduced, potentially improving system durability and efficiency.

Optionally, the method further comprises detecting that the main rotor has reached the first speed, wherein the transferring of the AC exciter into the second operating mode is performed in response to the detection. By detecting that the main rotor has reached the first speed before switching modes, the timing of excitation can be optimized, potentially improving synchronization accuracy and reducing switching losses.

According to a second aspect, an electronic control unit comprising processing circuitry configured to perform the method according to the first aspect is provided. Advantages and advantageous features associated with the electronic control unit are largely analogous to those described above in connection with the method according to the first aspect.

According to a third aspect, a synchronous condenser configured to be connected to an AC power grid, comprising the electronic control unit of the second aspect, is provided.

Optionally, the synchronous condenser comprises: a main stator; a main rotor mounted within the main stator; an AC exciter comprising a stator winding and an exciter rotor, the AC exciter being configured to supply field current to the main rotor; and a variable speed drive configured to supply AC power to the stator winding of the AC exciter. By integrating these components, the synchronous condenser is capable of initiating and controlling excitation internally, which may reduce the need for external equipment. In particular, no separate starting motor is needed since the AC exciter functions both as a starting motor, in the first operating mode, and as an exciter, in the second operating mode.

Optionally, the synchronous condenser further comprises a rectifying circuit configured to rectify the field current supplied by the AC exciter, the rectifying circuit comprising a set of diodes, a first set of thyristors configured to conduct current in a first direction upon application of a first gate current, and a second set of thyristors configured to conduct current in a second direction, opposite to the first direction, upon application of a second gate current. By incorporating such a rectifying circuit, short-circuiting of the exciter rotor is enabled when AC power is supplied to the stator winding of the AC exciter. Hence, operation of the AC exciter as an induction motor can be realized by applying the first and second gate currents. The configuration of the rectifying circuit allows for dynamic switching between the first and second operating modes using solid-state devices, eliminating the need for mechanical switching elements and improving reliability and response time.

According to a fourth aspect, a computer program comprising computer code which, when run on processing circuitry of a control unit, causes the control unit to perform the method of the first aspect is provided. The control unit may be the electronic control unit according to the second aspect.

According to a fifth aspect, a computer program product comprising a computer program of the fourth aspect, and a computer readable storage medium on which the computer program is stored, is provided.

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, action, etc." are to be interpreted openly as referring to at least one instance of the element, apparatus, component, means, module, action, etc., unless explicitly stated otherwise. The actions of any method disclosed herein do not have to be performed in the exact order disclosed, unless explicitly stated.

### BRIEF DESCRIPTION OF THE DRAWINGS

The inventive concept is now described, by way of example, with reference to the accompanying drawings, in which:
Fig. 1 is a schematic illustration of a synchronous condenser according to an embodiment;
Fig. 2 is a detail view of a part of the synchronous condenser in Fig. 1;
Fig. 3 is a flowchart illustrating methods according to embodiments;
Fig. 4 is a schematic diagram showing functional units of a control unit according to an embodiment;
Fig. 5 is a schematic diagram showing functional modules of a control unit according to an embodiment; and
Fig. 6 shows one example of a computer program product comprising computer readable means according to an embodiment.

The drawings are schematic and not drawn to scale.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

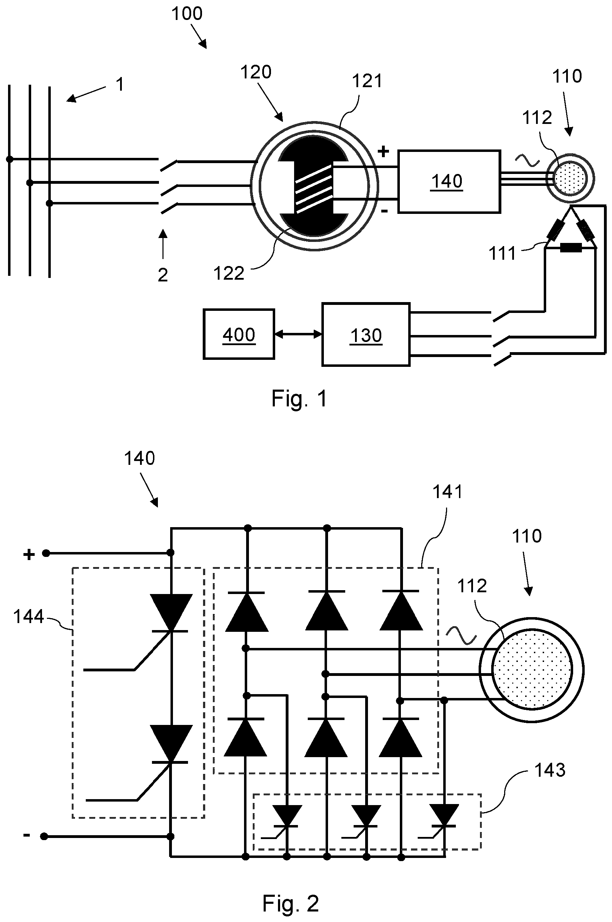

Fig. 1 illustrates a synchronous condenser 100 configured to be connected to an AC power grid 1 via switches 2. The synchronous condenser 100 comprises a main machine 120 including a main stator 121 and a main rotor 122 being rotatably arranged within the main stator 121. The main stator 121 is equipped with a three-phase winding, which, when electrically connected to the AC power grid 1 via the switches 2, generates a rotating magnetic stator field. The main rotor 122 is configured to rotate synchronously with the rotating magnetic stator field of the main stator 121 when the condenser 100 is in steady-state operation. The synchronous condenser 100 may typically be configured for electrical connection within a distribution system of the power grid 1, wherein a transmission voltage may typically be at a level within the range of 2-35 kV, such as within the range of 6-15 kV.

An AC exciter 110 is provided for supplying field current to the main rotor 122. The AC exciter 110 comprises a stator winding 111 and an exciter rotor 112 arranged to rotate relative to the stator winding 111. The AC exciter 110 is electrically connected to a rectifying circuit 140, which is configured to convert the AC output from the AC exciter into a DC field current. This field current is supplied to a field winding of the main rotor 122 via appropriate electrical connections. Although not illustrated, the exciter rotor 112 is mechanically connected to the main rotor 122, such as via a common rotor shaft. Hence, the exciter rotor 112 and the main rotor 122 will rotate together, with the same rotational speed and direction.

To enable self-starting of the synchronous condenser 100, the stator winding 111 of the AC exciter 110 is connected to a variable speed drive 130. The variable speed drive 130 is operable to supply controlled AC power to the exciter stator winding 111. During a start-up sequence, the AC exciter 110 operates in a first operating mode, functioning as an induction motor to accelerate the main rotor 122 to a first speed above synchronous speed of the synchronous condenser 100. In this mode, the exciter rotor 112 is short-circuited, thereby enabling induction motor operation. It directly drives the main rotor 122 via the mechanical connection, such as via the common rotor shaft.

Once the main rotor 122 reaches the target speed, the AC exciter 110 is transferred into a second operating mode. In the second operating mode, the short-circuit of the exciter rotor 112 is opened, and the AC exciter 110 generates an AC output which is rectified by the rectifying circuit 140. The resulting DC field current is supplied to the main rotor 122, initiating synchronous operation. The main rotor 122 is then allowed to decelerate naturally from the first speed to the synchronous speed, at which point the synchronous condenser 100 can be synchronized and connected to the power grid 1 via the switches 2. During steady-state operation, the field current supplied to the main rotor 122 is increased or decreased to control the generation or absorption of reactive power by the synchronous condenser 100, thereby regulating reactive power flow and supporting voltage stability in the power grid 1.

The synchronous condenser 100 may further comprise, or be communicatively connected to, an electronic control unit 400 configured to control operation of the synchronous condenser 100, such as by controlling the variable speed drive 130, the switches 2, and the rectifying circuit 140.

Although not illustrated in Fig. 1, a flywheel can be added to a rotating shaft of the synchronous condenser. The flywheel provides additional synchronous inertia that enhances grid frequency stability. Also other components and systems, such as a cooling system, may be provided.

Fig. 2 illustrates an embodiment of the rectifying circuit 140 associated with the AC exciter 110. The rectifying circuit 140 comprises multiple circuit components and is configured for both field current rectification and controlled short-circuiting. The rectifying circuit 140 comprises a set of diodes 141 arranged to rectify the alternating current generated by the exciter rotor 112, and fed to the rectifying circuit 140 via output terminals of the exciter rotor 112, into a direct current suitable for field excitation of the main rotor 122 as illustrated in Fig. 1. The set of diodes 141 is arranged in a full-wave bridge configuration.

Additionally, the rectifying circuit 140 includes a first set of thyristors 143 and a second set of thyristors 144. The first set of thyristors 143 is configured to conduct current in a first direction upon application of a first gate current. The second set of thyristors 144 is configured to conduct current in a second, opposite direction upon application of a second gate current. The first and second sets of thyristors 143, 144 are operable to short-circuit the output terminals of the exciter rotor 112, thereby enabling the AC exciter to function as an induction motor during the initial acceleration phase. As an alternative to thyristors, other types of power semiconductors, such as power transistors, may be used in the rectifying circuit.

During the start-up sequence in the first operating mode, the first and second sets of thyristors 143, 144 are fired in a controlled manner, by applying a gate current pulse, to short-circuit the exciter rotor 112 across both halves of the AC cycle, allowing induction motor operation. The set of diodes 141 together with the second set of thyristors 144 short-circuit the exciter rotor 112 in a positive current direction, whereas the first set of thyristors 143 and the set of diodes 141 short-circuit the exciter rotor in a negative current direction. Hence, no current is fed to the field winding of the main rotor 122. Once the main rotor 122 reaches the first speed above the synchronous speed, the short-circuit is opened by ceasing conduction through the thyristors, allowing the AC exciter 110 to resume operation as a free running motor. In this state, the AC output from the AC exciter 110 is rectified by the set of diodes 141 and supplied as a DC field current to the main rotor 122 of the synchronous condenser 100.

In an alternative embodiment of the rectifying circuit 140, the first set of thyristors 143 may be omitted, such that the rectifying circuit 140 comprises the set of diodes 141, such as comprising six diodes, and the second set of thyristors 144, but not the first set of thyristors 143. In this alternative embodiment, the second set of thyristors 144, comprising two antiparallel thyristors connected in series, are fired in a controlled manner to short-circuit the exciter rotor 112 across both halves of the AC cycle.

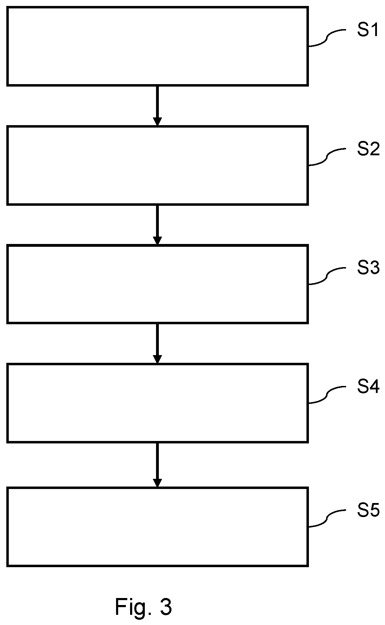

Fig. 3 illustrates a method of starting a synchronous condenser configured to be connected to an AC power grid, such as the synchronous condenser 100 described with reference to figs. 1-2, according to embodiments. The method is computer-implemented and may be performed by an electronic control unit, e.g., the control unit 400 illustrated in Fig. 1. The method comprises the following actions, that may be taken in any suitable order unless indicated otherwise:
**Action S1:** Operating the AC exciter 110 of the synchronous condenser 100 in a first operating mode, in which the AC exciter 110 functions as a motor, to accelerate the main rotor 122 of the synchronous condenser 100 to a first speed, the first speed being above a synchronous speed of the synchronous condenser 100. The first speed is preferably 110% of the synchronous speed or less, such as 105% of the synchronous speed or less. In the first operating mode, the variable speed drive 130 may be controlled to supply AC power to the stator winding 111 of the AC exciter 110. As described above with reference to figs. 1-2, the exciter rotor 112 may in the first operating mode be short-circuited to enable the AC exciter 110 to function as an induction motor. The short-circuiting of the exciter rotor 112 may comprise firing of the first set of thyristors 143 to short-circuit the exciter rotor 112, and firing of the second set of thyristors 144 to maintain the short-circuit during alternating current operation. If the first set of thyristors are omitted, the short-circuiting of the exciter rotor 112 may comprise firing of the second set of thyristors 144 to short-circuit the exciter rotor across both halves of the AC cycle.
**Action S2** (optional): Detecting that the main rotor 122 has reached the first speed above the synchronous speed. This may, e.g., be detected by using a rotational speed sensor to monitor the rotational speed during operation of the AC exciter 110 in the first operating mode.
**Action S3:** Transferring the AC exciter 110 from the first operating mode into a second operating mode, in which the AC exciter 110 supplies field current to the main rotor 122. If it has been detected that the rotational speed has reached the first speed, the transferring of the AC exciter 110 into the second operating mode may be performed in response to this detection. As described above, in the second operating mode, the rectifying circuit 140 rectifies the AC current supplied by the exciter rotor 112 such that DC field current is fed to the field winding of the main rotor 122. The transferring of the AC exciter 110 into the second operating mode may hence comprise opening of the short-circuit of the exciter rotor 112 to enable the AC exciter 110 to supply the field current to the main rotor 122
**Action S4:** In the second operating mode, allowing the main rotor 122 to decelerate from the first speed to the synchronous speed.
**Action S5** (optional): Connecting the synchronous condenser 100 to the power grid 1 once a connection condition is fulfilled. The connection is in the illustrated embodiment in Fig. 1 realized by controlling the switches 2 to close. The connection condition may be considered fulfilled when a voltage magnitude, a frequency, and a phase angle of the synchronous condenser 100 is within a tolerance range defined relative to the AC power grid 1. Upon connection, the synchronous condenser 100 thereby becomes automatically synchronized with the power grid 1. The action S5 of connecting the synchronous condenser 100 to the power grid 1 should be performed after the action S4 of allowing the main rotor 122 to decelerate to the synchronous speed in the second operating mode of the AC exciter 110.

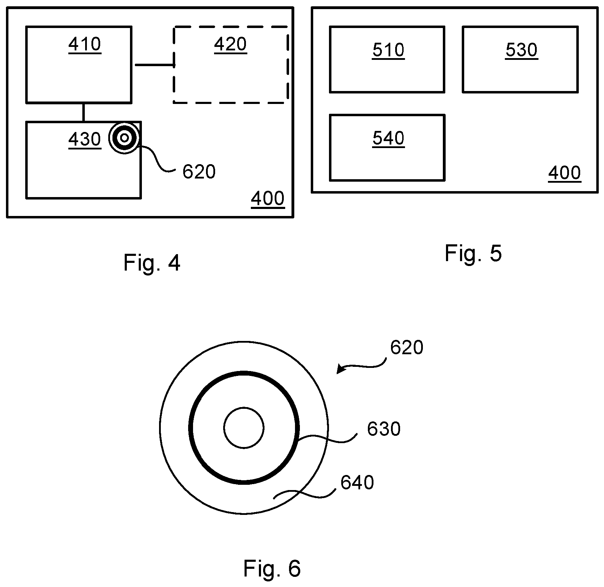

Fig. 4 schematically illustrates, in terms of a number of functional units, the components of a control unit 400 according to an embodiment. Processing circuitry 410 is provided using any combination of one or more of a suitable central processing unit (CPU), multiprocessor, microcontroller, digital signal processor (DSP), etc., capable of executing software instructions stored in a computer program product 620 (as in Fig. 6), e.g., in the form of a storage medium 430. The processing circuitry 410 may further be provided as at least one application specific integrated circuit (ASIC), or field programmable gate array (FPGA).

Particularly, the processing circuitry 410 is configured to cause the control unit 400 to perform a set of operations, or actions, as disclosed above. For example, the storage medium 430 may store the set of operations, and the processing circuitry 410 may be configured to retrieve the set of operations from the storage medium 430 to cause the control unit 400 to perform the set of operations. The set of operations may be provided as a set of executable instructions. The processing circuitry 410 is thereby arranged to execute methods as herein disclosed.

The storage medium 430 may also comprise persistent storage, which, for example, can be any single one or combination of magnetic memory, optical memory, solid state memory or even remotely mounted memory.

The control unit 400 may further comprise a communications interface 420 for communications with other entities, functions, nodes, and devices, over suitable interfaces. As such, the communications interface 420 may comprise one or more transmitters and receivers, comprising analogue and digital components.

The processing circuitry 410 controls the general operation of the control unit 400, e.g., by sending data and control signals to the communications interface 420 and the storage medium 430, by receiving data and reports from the communications interface 420, and by retrieving data and instructions from the storage medium 430.

Other components, as well as the related functionality, of the control unit 400 are omitted in order not to obscure the concepts presented herein.

Fig. 5 schematically illustrates, in terms of a number of functional modules, the components of a control unit 400 according to an embodiment. The control unit 400 of Fig. 5 comprises a number of functional modules: an operating module 510 configured to operate the AC exciter 110 of the synchronous condenser 100 in the first operating mode to accelerate the main rotor 122 to the first speed; a transferring module 530 configured to transfer the AC exciter 110 into the second operating mode, in which the AC exciter 110 supplies field current to the main rotor 122; and an allowing module 540 configured to allow the main rotor 122 to decelerate from the first speed to the synchronous speed when the AC exciter has been transferred into the second operating mode. The control unit 400 may further comprise a number of optional modules (not shown) configured to perform the actions described above with reference to Fig. 3. In general terms, each functional module 510, 530, 540 may be implemented in hardware or in software. Preferably, one or more or all functional modules 510, 530, 540 may be implemented by the processing circuitry 410, possibly in cooperation with the communications interface 420 and the storage medium 430. The processing circuitry 410 may thus be arranged to from the storage medium 430 fetch instructions as provided by a functional module 510, 530, 540 and to execute these instructions, thereby performing any actions of the control unit 400 as disclosed herein.

Fig. 6 shows one example of a computer program product 620 comprising a computer readable means 640. On this computer readable means 640, a computer program 630 can be stored, which computer program 630 can cause the processing circuitry 410 and thereto operatively coupled entities and devices, such as the communications interface 420 and the storage medium 430, to execute methods according to embodiments described herein. The computer program 630 and/or computer program product 620 may thus provide means for performing any actions of the control unit 400 as herein disclosed.

In the example of Fig. 6, the computer program product 620 is illustrated as an optical disc, such as a CD (compact disc) or a DVD (digital versatile disc) or a Blu-Ray disc. The computer program product 620 could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 630 is here schematically shown as a track on the depicted optical disk, the computer program 630 can be stored in any way which is suitable for the computer program product 620.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

## Claims

1. A method of starting a synchronous condenser (100) configured to be connected to an AC power grid (1), the method comprising:
- operating (S1) an AC exciter (110) of the synchronous condenser (100) in a first operating mode, in which the AC exciter (110) functions as a motor, to accelerate a main rotor (122) of the synchronous condenser (100) to a first speed, the first speed being above a synchronous speed of the synchronous condenser;
- transferring (S3) the AC exciter (110) into a second operating mode, in which the AC exciter (110) supplies field current to the main rotor (122);
- in the second operating mode, allowing (S4) the main rotor (122) to decelerate from the first speed to the synchronous speed.

2. The method of claim 1, wherein, in the first operating mode, the method comprises controlling a variable speed drive (130) to supply AC power to a stator winding (111) of the AC exciter (110).

3. The method of any one of the preceding claims, further comprising connecting the synchronous condenser (100) to the power grid once a connection condition is fulfilled.

4. The method of claim 3, wherein the connection condition is considered fulfilled when a voltage magnitude, a frequency and a phase angle of the synchronous condenser (100) is within a tolerance range defined relative to the AC power grid (1).

5. The method of any one of the preceding claims, wherein the operating (S1) of the AC exciter (110) in the first operating mode comprises short-circuiting an exciter rotor (112) of the AC exciter (110) to enable the AC exciter (110) to function as an induction motor.

6. The method of claim 5, wherein the short-circuiting of the exciter rotor (112) comprises firing of a first set of thyristors (143) configured to conduct current in a first direction to short-circuit the exciter rotor (112), and firing of a second set of thyristors (144) configured to conduct current in a second direction, opposite to the first direction, to maintain the short-circuit during alternating current operation.

7. The method of claim 5 or 6, wherein the transferring (S3) of the AC exciter (110) into the second operating mode comprises opening the short-circuit of the exciter rotor (112) to enable the AC exciter (110) to supply the field current to the main rotor (122).

8. The method of any one of the preceding claims, wherein the first speed is no more than 110% of the synchronous speed, preferably no more than 105% of the synchronous speed.

9. The method of any one of the preceding claims, further comprising:
- detecting (S2) that the main rotor has reached the first speed;
wherein the transferring (S3) of the AC exciter (110) into the second operating mode is performed in response to the detection.

10. An electronic control unit (400) comprising processing circuitry (410) configured to perform the method of any one of claims 1-9.

11. A synchronous condenser (100) configured to be connected to an AC power grid (1), comprising the electronic control unit of claim 10.

12. The synchronous condenser of claim 11, further comprising:
a main stator (121),
a main rotor (122) mounted within the main stator (121),
an AC exciter (110) comprising a stator winding (111) and an exciter rotor (112), the AC exciter (110) being configured to supply field current to the main rotor (122), and
a variable speed drive (130) configured to supply AC power to the stator winding (111) of the AC exciter (110).

13. The synchronous condenser of claim 12, further comprising a rectifying circuit (140) configured to rectify the field current supplied by the AC exciter, the rectifying circuit comprising:
a set of diodes (141);
a first set of thyristors (143) configured to conduct current in a first direction upon application of a first gate current; and
a second set of thyristors (144) configured to conduct current in a second direction, opposite to the first direction, upon application of a second gate current.

14. A computer program (630) comprising computer code which, when run on processing circuitry (410) of a control unit (400), causes the control unit (400) to perform the method of any one of claims 1-9.

15. A computer program product (620) comprising a computer program (630) of claim 14, and a computer readable storage medium (640) on which the computer program (630) is stored.
